(19) **Europäisches Patentamt**

**European Patent Office**

**Office européen des brevets**

(11) **EP 1 216 957 B1**

(12) **FASCICULE DE BREVET EUROPEEN**

(45) Date de publication et mention
de la délivrance du brevet:
**23.03.2005 Bulletin 2005/12**

(51) Int Cl.$^7$: **C01B 17/02**

(21) Numéro de dépôt: **01403074.6**

(22) Date de dépôt: **30.11.2001**

(54) **Procédé de purification du soufre**

Verfahren zur Reinigung von Schwefel

Process for the purification of sulfur

(84) Etats contractants désignés:
**BE DE GB IT NL**

(30) Priorité: **21.12.2000 FR 0016727**

(43) Date de publication de la demande:
**26.06.2002 Bulletin 2002/26**

(73) Titulaire: **Institut Français du Pétrole
92852 Rueil-Malmaison Cedex (FR)**

(72) Inventeurs:
- **Carrette, Pierre-Louis
 69002 Lyon (FR)**
- **Huard, Thierry
 92120 Montrouge (FR)**
- **Streicher, Christian
 92500 Rueil Malmaison (FR)**

(56) Documents cités:
**FR-A- 2 700 713         FR-A- 2 784 370
US-A- 4 517 170         US-A- 4 664 902**

**EP 1 216 957 B1**

**Description**

La présente invention concerne un procédé discontinu de purification du soufre par lavage avec un solvant organique. Le soufre à purifier est en effet contaminé par des espèces chimiques organiques ou inorganiques, solides ou liquides. Le procédé selon l'invention s'applique, par exemple, au soufre obtenu dans un procédé « rédox » de désulfuration d'un gaz contenant au moins de l'hydrogène sulfuré. Ce type de procédé peut utiliser une solution catalytique comprenant au moins un métal multivalent ($Fe^{3+}$ ou $V^{5+}$ par exemple) chélaté ou non par au moins un agent chélatant dans des conditions appropriées pour réaliser l'oxydation de l'hydrogène sulfuré en soufre élémentaire et la réduction simultanée du métal multivalent chélaté ou non d'un degré d'oxydation supérieur à un degré d'oxydation inférieur. L'effluent gazeux récupéré est quasiment exempt d'hydrogène sulfuré. La solution catalytique est au moins partiellement réduite et contient du soufre élémentaire. La solution catalytique peut être débarrassée du soufre avant ou après l'étape de régénération de la solution catalytique. Le soufre recueilli au moins en partie est ensuite purifié selon le procédé de l'invention.

Les brevets FR-A-2 700 713 et US-A-4 664 902 illustrent l'arrière plan technologique.

L'art antérieur décrit de nombreux procédés « rédox » et des dispositifs associés permettant d'éliminer l'hydrogène sulfuré et de récupérer le soufre élémentaire formé au cours du procédé.

A titre d'exemple, un procédé de désulfuration utilisant un chélate de fer comporte par exemple les deux étapes d'oxydo-réduction suivantes :

- dans une première étape (absorption du gaz et réaction d'oxydo-réduction), l'hydrogène sulfuré présent dans le gaz à traiter réagit par exemple avec des ions ferriques chélatés selon la réaction :

$$H_2S + 2\ Fe^{3+}\ (chél) \rightarrow S + 2\ H^+ + 2\ Fe^{2+}\ (chél) \tag{1}$$

- dans une deuxième étape (régénération), les ions ferreux sont réoxydés par l'oxygène de l'air suivant la réaction :

$$2\ Fe^{2+}\ (chél) + 2\ H^+ + 1/2\ O_2 \rightarrow 2\ Fe^{3+}\ (chél) + H_2O \tag{2}$$

La solution catalytique peut être une solution aqueuse ou non de fer chélaté, produite à partir de sels de fer ferreux ou ferrique tels que des sulfates, des nitrates, des thiosulfates, des chlorures, des acétates, des oxalates et/ou des phosphates. Les ions ferreux et ferriques peuvent être remplacés respectivement par des ions vanadates IV et V. La solution catalytique peut contenir en outre des ions sodium, potassium, ammonium, carbonates et/ou anthraquinone disulfonates.

Les agents chélatants, utilisés seuls ou en mélange, peuvent être des composés organiques connus pour leurs propriétés complexantes, par exemple l'acétylacétone, l'acide citrique, l'acide salicylique, l'acide sulfosalicylique, le tiron (acide catéchodisulfonique), le dimercapto-2,3-propanol et les aminoacides comme par exemple l'EDTA (acide éthylènediamine tétraacétique), l'HEDTA (acide hydroxy-2-éthylènediamine triacétique), le NTA (acide nitrilotriacétique), le DCTA (acide diamino-1,2-cyclohexane tétraacétique), le DPTA (acide diéthylènetriamine pentaacétique), l'IDA (acide iminodiacétique) et l'ADA (acide N-(2-acétamido)iminodiacétique).

Le soufre solide formé dans les procédés « rédox » est en contact intime avec la solution catalytique. Le plus souvent, les techniques de récupération du soufre utilisées sont mécaniques : filtration, flottation ou centrifugation. La quantité de solution catalytique entraînée physiquement avec le soufre est donc importante. Par conséquent, le soufre produit est de mauvaise qualité.

D'autre part, au cours de la deuxième étape (2), peuvent se produire des réactions secondaires, en particulier la dégradation de l'agent chélatant, qui entraînent la formation de produits s'accumulant dans la solution catalytique et pouvant précipiter. Ces produits, composés organiques ou inorganiques, sont également entraînés avec le soufre et contribuent à sa mauvaise qualité.

Ainsi le soufre, issu en particulier des procédés « rédox », n'est pas de qualité suffisante, notamment dans l'hypothèse d'une utilisation dans le secteur de la chimie.

L'art antérieur décrit des procédés et dispositifs permettant de purifier le soufre élémentaire formé dans des procédés « rédox ».

Le brevet US 5 122 351 décrit une méthode où le soufre est lavé par mise en suspension dans l'eau puis fondu pour être séparé de la solution aqueuse. La solution de lavage est concentrée par évaporation et réinjectée dans le procédé « rédox » à l'étape d'absorption de l'$H_2S$. L'eau évaporée est recyclée pour le lavage du soufre. Les coûts d'investissement d'un tel procédé sont importants. Il nécessite entre autre un séparateur sous pression et un évaporateur. De plus, ce procédé impose l'utilisation de matériaux coûteux pour limiter les problèmes de corrosion liés à la présence d'eau qui sont accrus à haute température. Par ailleurs, les produits insolubles dans l'eau ne seront pas éliminés.

Le brevet US 4 705 676 décrit une méthode de purification du soufre par fusion du soufre dans un séparateur de phases en atmosphère inerte. La solution catalytique aqueuse surnageante est réinjectée dans l'absorbeur ou dans le régénérateur. Le soufre liquide est filtré. Ce procédé nécessite un séparateur sous pression susceptible de résister à la corrosion. De plus la filtration du soufre liquide ne peut être envisagée qu'avec un filtre à taille de pores élevée pour limiter les problèmes de bouchage. Ainsi les fines particules resteront mélangées au soufre.

Le brevet US 4 517 170 décrit une méthode d'extraction du soufre de la solution catalytique d'un procédé « rédox » par mise en suspension du soufre solide dans un mélange d'hydrocarbures aliphatiques ayant 4 à 8 atomes de carbone et récupération de la solution catalytique aqueuse. Le soufre et les hydrocarbures peuvent alors être séparés suivant différentes méthodes. Si le soufre solide est séparé mécaniquement (filtration, centrifugation...), il contiendra une quantité importante d'hydrocarbures qui limite sa pureté.

Selon une variante de cette méthode, la suspension de soufre dans les hydrocarbures peut être chauffée dans un séparateur à une température suffisante pour permettre la fusion du soufre. L'utilisation d'un séparateur sous pression pour maintenir les hydrocarbures en phase liquide et obtenir une séparation de phases engendre des coûts importants. De plus, le soufre ainsi obtenu présente une pureté réduite par la solubilité des hydrocarbures dans le soufre liquide. Enfin, si le séparateur est à une pression proche de la pression atmosphérique, les hydrocarbures sont vaporisés. Cette vaporisation conduit à des résidus qui polluent le soufre. Ce procédé conduit donc à du soufre de pureté réduite.

L'objet de l'invention est de proposer une nouvelle méthode de lavage du soufre qui offre notamment l'avantage de conduire à un soufre d'une très grande pureté. En effet, selon invention le soufre est lavé à l'état liquide ce qui permet d'éliminer tout produit qui resterait adsorbé sur le soufre à l'état solide. De plus l'invention utilise un solvant organique quasiment insoluble dans le soufre liquide et qui permet d'éliminer tout composé soluble ou insoluble dans les solutions couramment utilisées dans les procédés « rédox ». Les plus fines particules sont aussi éliminées par extraction dans le solvant de lavage. Le procédé décrit dans l'invention présente par ailleurs des coûts d'investissement moins élevés que les procédés précités de l'art antérieur. En effet, l'enceinte de mise en contact du soufre avec le solvant est utilisée à une pression proche de la pression atmosphérique. De plus, elle peut être réalisée en acier carbone car le lavage du soufre ne nécessite aucune addition d'eau et l'eau, éventuellement présente dans le soufre, est vaporisée dans des conditions de fonctionnement appropriées.

Enfin, la purification du soufre telle qu'elle est réalisée par la présente invention permet d'une part de le valoriser et d'autre part, de diminuer les volumes de mise en décharge dans le cas où le soufre non purifié serait considéré comme un déchet.

La présente invention concerne un procédé de purification du soufre issu par exemple d'un procédé « rédox » et contenant des impuretés.

Il est caractérisé en ce qu'il comporte la succession d'étapes suivantes :

Dans une zone de mise en contact, on met en contact du soufre solide avec au moins un solvant organique choisi dans le groupe formé par les mono alcools de 8 à 40 atomes de carbone, les polyols comprenant 2 à 8 groupes hydroxyles et ayant de 8 à 40 atomes de carbone, les polyalkylèneglycols et les éthers de polyalkylèneglycols dans des conditions appropriées pour effectuer la fusion du soufre.

On stoppe l'alimentation en soufre et on laisse décanter la mélange obtenu de façon à réaliser la démixtion ou la séparation liquide/liquide du soufre liquide purifié obtenu et du solvant organique contenant les impuretés.

On soutire une partie au moins du soufre liquide purifié de la partie inférieure de la zone de mise en contact.

Le soufre solide à traiter est en général mis en contact avec le solvant organique dans des conditions appropriées de chauffage pour effectuer la fusion du soufre.

Les produits contenus dans le soufre sont séparés après décantation. Ils peuvent être par exemple vaporisés ou dissous dans le solvant ou peuvent aussi se concentrer à l'interface entre le soufre liquide et le solvant, préférentiellement dans le solvant.

Le soufre liquide ainsi lavé est récupéré. Il est suffisamment pur pour permettre sa valorisation.

Le solvant organique peut être utilisé jusqu'à sa saturation en produits dissous et/ou en suspension ne permettant plus la séparation du soufre liquide et du solvant.

La phase organique peut alors être incinérée ou mise en décharge au moins en partie.

Selon une variante de l'invention, le solvant peut être en partie au moins régénéré. Plus précisément, on peut soutirer une partie au moins du solvant organique résultant de l'étape de décantation contenant les impuretés, on purifie ledit solvant organique de façon à le débarrasser d'une partie au moins des impuretés, on recueille une partie au moins du solvant organique purifié et on la recycle dans la zone de mise en contact. Selon une mise en oeuvre du procédé, les produits solides sont séparés du solvant selon un mode ou des modes de traitement tels que ceux décrits dans le brevet FR 2784370.

Le solvant de lavage est au moins un solvant organique pouvant être choisi dans le groupe formé par :

- les alcools lourds ayant 8 à 40 atomes de carbone,
- les polyols comprenant 2 à 4 groupes hydroxyles et ayant de 8 à 40 atomes de carbone,
- les polyalkylèneglycols,
- les éthers de ces polyalkylèneglycols.

Ces alcools lourds et polyols peuvent être linéaires ou ramifiés. Les alcools lourds peuvent être primaires, secondaires ou tertiaires, de préférence primaires pour des raisons de coût.

Des solvants organiques utilisables selon l'invention sont cités à titre d'exemples :

1-octanol, 1-dodécanol, 1-hexadécanol, 9-heptadécanol, 1-eicosanol, 1,4-heptadécanediol, 1,4,8-pentadécanetriol, pentaéthylèneglycol, hexaéthylèneglycol, octaéthylèneglycol, diéthylèneglycol, triéthylèneglycol, polyéthylèneglycol 400 (de masse molaire moyenne en poids de 400 g/mol), tripropylèneglycol, propylèneglycol, polypropylèneglycol 600 (de masse molaire moyenne en poids de 600 g/mol), monoéther éthylique de l'octaéthylèneglycol, monoéther butylique du térapropylèneglycol, monoether méthylique du polyéthylèneglycol 400, monoéther éthylique du tétrapropylèneglycol. De préférence, on peut utiliser un polyéthylèneglycol en raison de son insolubilité dans le soufre liquide, de sa faible tension de vapeur et de sa bonne stabilité thermique.

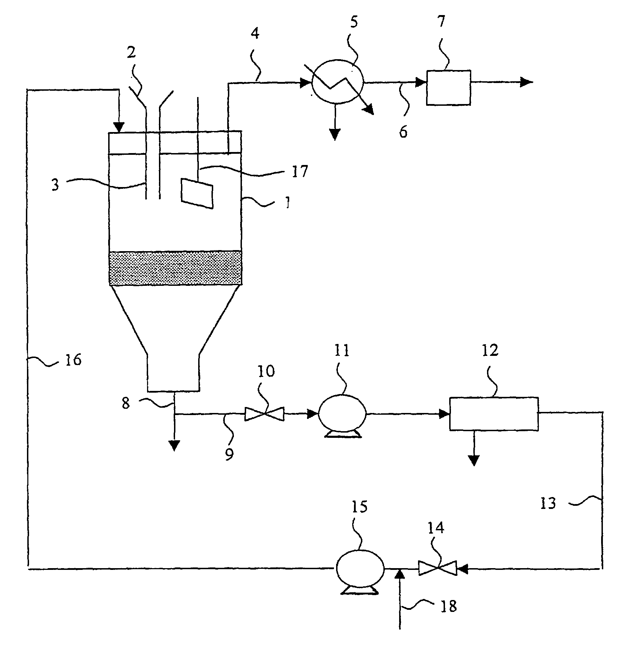

D'autres avantages et caractéristiques selon l'invention seront mieux compris à la lecture de la description ci-après du mode de réalisation décrit à titre d'exemple non limitatif, en se référant à la figure 1 qui schématise un agencement des appareils nécessaires pour la mise en oeuvre du procédé selon l'invention dans le cas de la régénération et du recyclage du solvant.

Le dispositif pour mettre en oeuvre le procédé en discontinu selon l'invention qui est décrit sur la figure 1 comporte une enceinte de mise en contact (1) du soufre à traiter avec le solvant, où s'effectuent la fusion du soufre, son lavage de préférence sous agitation mécanique et la démixtion ou séparation liquide/liquide du soufre liquide et du solvant. Le soufre à traiter peut contenir de 2 à 90 % poids d'une solution catalytique « rédox ». Faire subir au soufre une étape préalable de séparation (filtration, centrifugation...) permet avantageusement de récupérer une partie de la solution catalytique. Le soufre à traiter contient préférentiellement de 5 à 50 % poids de solution catalytique.

La température de l'enceinte de mise en contact avec le solvant de lavage est habituellement comprise entre 120 et 160°C, de préférence entre 125 et 150°C, grâce à des moyens de chauffage conventionnels. Le soufre est en général mélangé avec le solvant sous agitation dans des proportions appropriées : de 5 à 80 % poids de soufre à traiter et de préférence de 40 à 60 % poids.

Le mélange soufre-solvant est préférentiellement effectué sous agitation. Après arrêt de l'introduction de soufre, l'agitation peut être arrêtée ou maintenue de préférence, de 5 à 60 minutes. L'eau et/ou des produits organiques éventuellement contenus dans le soufre se vaporisent.

L'agitation est alors stoppée et après décantation, trois zones peuvent être distinguées dans l'enceinte. La décantation dure de 1 à 60 minutes et de préférence de 2 à 15 minutes.

La première zone, supérieure, est la phase organique : le solvant de lavage pouvant contenir des impuretés sous forme de produits dissous et/ou en suspension. Le ciel situé au-dessus de la phase organique peut être un gaz inerte.

La deuxième zone est l'interface entre le soufre liquide et le solvant, zone contenant le plus de produits solides comme impuretés.

Enfin, la troisième zone est le fond de l'enceinte qui ne contient que du soufre liquide.

L'enceinte de mise en contact (1) est équipée d'un agitateur mécanique (17), d'un conduit d'amenée (2) du soufre solide à purifier (par exemple une trémie chauffée équipée d'un conduit (3) permettant l'introduction du soufre), d'un conduit d'évacuation des composés vaporisés (4), d'un conduit de soutirage (9) du solvant à recycler et d'un conduit d'amenée (16) du solvant, recyclé après l'élimination des impuretés, dans la partie supérieure de l'enceinte.

En sortie de l'enceinte (1), les produits vaporisés sont amenés via le conduit (4) vers, par exemple, un échangeur de chaleur (5), où l'eau et/ou des produits organiques éventuellement contenus dans le soufre sont condensés. L'effluent gazeux résiduel peut être envoyé via le conduit (6) sur un charbon actif (7) avant rejet.

Le soufre liquide purifié est récupéré par un conduit (8) à l'extrémité inférieure de l'enceinte (1).

Le solvant peut être recyclé. Lorsque la qualité du soufre n'est plus satisfaisante, tout le solvant ou le solvant contenant la majorité des impuretés peut être repris par un conduit (9) dans la partie inférieure de l'enceinte (1) au travers d'une vanne (10) par une pompe (11) et être envoyé sur un système de purification du solvant (12). Il peut s'agir, par exemple, d'un système de filtration des produits solides ou d'un système de lavage à l'eau dans des proportions permettant la solubilisation des produits solides et la séparation de la phase aqueuse et de la phase organique. En sortie, le solvant purifié est recyclé par un conduit (13) à travers une vanne (14) via une pompe (15) vers l'enceinte (1) de traitement du soufre. Un ajout de solvant par une ligne (18) peut être réalisé en amont de la pompe (15). Les éléments (9) à (16) sont préférentiellement chauffés à une température appropriée pour éviter la cristallisation du soufre. Le solvant peut être utilisé jusqu'à ce que la séparation de phases ne soit plus définie.

L'exemple donné ci-après a pour objectif de mieux faire comprendre le procédé selon invention, et les avantages qu'il offre.

Exemple :

Le soufre à traiter contient :

- 12% (massique) d'eau,
- 3.15% (massique) d'un mélange équimolaire des sels de sodium des acides nitrilotriacétique et iminodiacétique,
- 0.4% (massique) de fer.

Dans un réacteur double enveloppe de 2 litres, 600 g de polyéthylène glycol de masse molaire 400 g/mol (PEG 400) sont chauffés à 125°C sous agitation mécanique. 400 g de soufre à traiter y sont introduits. Le soufre fond et l'eau s'évapore. L'agitation est maintenue pendant 15 minutes. L'arrêt de l'agitation permet la décantation du soufre liquide. Les sels apparaissent à l'interface entre la phase inférieure, le soufre liquide et la phase supérieure, le PEG 400. Après 2 minutes de décantation, le soufre liquide est soutiré et les 600 g de PEG 400 sont laissés dans le réacteur. 400 g de soufre à traiter sont alors introduits sous agitation mécanique et le mode opératoire décrit ci-dessus est de nouveau suivi. L'addition de soufre est stoppée lorsque la séparation de phases est lente et imparfaite. Le soufre prélevé de couleur jaune clair contient moins de 0,1% poids de carbone et son taux de cendres est inférieur à 0,1% poids. Ainsi, 6400 g de soufre impur ont pu être traités avant qu'il ne soit nécessaire de régénérer le solvant contenant les impuretés solides, dissoutes et/ou en suspension.
On a répété l'exemple en utilisant comme solvant organique le 1-octanol à la place du PEG 400 et on a obtenu sensiblement les mêmes résultats.

**Revendications**

1. Procédé de purification du soufre contenant des impuretés **caractérisé en ce qu'**on met en contact dans une zone de mise en contact du soufre solide avec au moins un solvant organique choisi dans le groupe formé par les mono alcools de 8 à 40 atomes de carbone, les polyols comprenant 2 à 8 groupes hydroxyles et ayant de 8 à 40 atomes de carbone, les polyalkylèneglycols et les éthers de polyalkylèneglycols dans des conditions appropriées pour effectuer la fusion du soufre, on stoppe l'alimentation en soufre et on laisse décanter le mélange obtenu de façon à réaliser la démixtion ou la séparation liquide/liquide du soufre liquide purifié obtenu et du solvant organique contenant les impuretés, et on soutire une partie au moins du soufre liquide purifié de la partie inférieure de la zone de mise en contact.

2. Procédé selon la revendication 1, dans lequel on soutire une partie au moins du solvant organique résultant de l'étape de décantation contenant les impuretés, on purifie ledit solvant organique de façon à le débarrasser d'une partie au moins des impuretés, on recueille une partie au moins du solvant organique purifié et on la recycle dans la zone de mise en contact.

3. Procédé selon la revendication 1 dans lequel on soutire une partie au moins du solvant organique résultant de l'étape de décantation et on l'élimine.

4. Procédé selon l'une des revendications 1 à 3 dans lequel on effectue préalablement à l'étape de mise en contact avec le solvant organique une étape de séparation d'une partie au moins d'une solution catalytique « rédox » en mélange avec le soufre à purifier.

5. Procédé selon l'une des revendications 1 à 4 dans lequel le soufre à purifier contient de 2 à 90 % poids de la solution catalytique et de préférence de 5 à 50 % en poids.

6. Procédé selon l'une des revendications 1 à 5, dans lequel la température de la zone de mise en contact est de 120 à 160°C.

7. Procédé selon l'une des revendications 1 à 6 dans lequel le soufre à purifier est mis en contact avec le solvant dans des proportions comprises entre 5 et 80 % poids de soufre.

8. Procédé selon l'une des revendications 1 à 7 dans lequel on soutire une phase vapeur que l'on condense de façon à récupérer une phase liquide contenant des impuretés et un effluent gazeux résiduel que l'on purifie avant de le rejeter.

9. Procédé selon l'une des revendications 1 à 8, dans lequel le solvant organique est un polyéthylène glycol.

## Patentansprüche

1. Verfahren zur Reinigung von Schwefel, der Verunreinigungen enthält, **dadurch gekennzeichnet, dass** man in einer Kontaktierzone flüssigen Schwefel mit wenigstens einem organischen Lösungsmittel kontaktiert, gewählt aus der Gruppe, die gebildet wird durch die Monoalkohole mit 8 bis 40 Kohlenstoffatomen, die Polyole, die 2 bis 8 Hydroxylgruppen umfassen und 8 bis 40 Kohlenstoffatome haben, die Polyalkylenglykole und die Ether der Polyalkylenglykole unter Bedingungen, die geeignet sind, um das Schmelzen des Schwefels durchzuführen, man die Schwefelzufuhr stoppt und man das erhaltene Gemisch derart dekantieren lässt, dass die Entmischung oder die Flüssig-/ Flüssigtrennung des gereinigten erhaltenen flüssigen Schwefels und des organischen, die Verunreinigungen enthaltenden, Lösungsmittels durchgeführt wird und man einen Teil wenigstens des gereinigten flüssigen Schwefels von dem unteren Teil der Kontaktierzone abzieht.

2. Verfahren nach Anspruch 1, bei dem man einen Teil wenigstens des organischen, aus der Dekantierstufe resultierenden und die Verunreinigungen enthaltenden Lösungsmittels abzieht, man das organische Lösungsmittel derart reinigt, dass es von einem Teil wenigstens der Verunreinigungen befreit wird, man einen Teil wenigstens des organischen gereinigten Lösungsmittels gewinnt und ihn zur Kontaktzone rezykliert.

3. Verfahren nach Anspruch 1, bei dem man einen Teil wenigstens des organischen Lösungsmittels, das aus der Dekantierstufe resultiert, abzieht und ihn entfernt.

4. Verfahren nach einem der Ansprüche 1 bis 3, bei dem man vor der Kontaktierstufe mit dem organischen Lösungsmittel eine Trennstufe eines Teils wenigstens einer katalytischen "Redox"-Lösung im Gemisch mit dem zu reinigenden Schwefel durchführt.

5. Verfahren nach einem der Ansprüche 1 bis 4, bei dem der zu reinigende Schwefel 2 bis 90 Gew.-% der katalytischen Lösung und vorzugsweise 5 bis 50 Gew.-% enthält.

6. Verfahren nach einem der Ansprüche 1 bis 5, bei dem die Temperatur der Kontaktzone 120 bis 160°C ist.

7. Verfahren nach einem der Ansprüche 1 bis 6, bei dem der zu reinigende Schwefel mit dem Lösungsmittel in Anteilen kontaktiert wird, die zwischen 5 und 80 Gew.-% Schwefel liegen.

8. Verfahren nach einem der Ansprüche 1 bis 7, bei dem man eine Dampfphase abzieht, die man derart kondensiert, dass eine Flüssigphase gewonnen wird, die Verunreinigungen enthält, und ein restlichen Gasabstrom, den man reinigt, bevor man ihn verwirft.

9. Verfahren nach einem der Ansprüche 1 bis 8, bei dem das organische Lösungsmittel ein Polyethylenglykol ist.

## Claims

1. Process for the purification of sulfur that contains impurities, **characterized in that** in a contact zone, solid sulfur is brought into contact with at least one organic solvent that is selected from the group that is formed by monohydric alcohols with 8 to 40 carbon atoms, polyols that comprise 2 to 8 hydroxyl groups and that have 8 to 40 carbon atoms, polyalkylene glycols and polyalkylene glycol ethers under suitable conditions for carrying out the melting of sulfur; the supply of sulfur is halted, and the mixture that is obtained is allowed to decant so as to produce the segregation or liquid/liquid separation of the purified liquid sulfur that is obtained and organic solvent that contains impurities, and at least a portion of the purified liquid sulfur is drawn off from the lower portion of the contact zone.

2. Process according to claim 1, wherein at least a portion of the organic solvent that results from the decanting stage that contains impurities is drawn off, said organic solvent is purified so as to remove from it at least a portion of the impurities; at least a portion of the purified organic solvent is collected, and it is recycled in the contact zone.

3. Process according to claim 1, wherein at least a portion of the organic solvent that results from the decanting stage is drawn off, and it is eliminated.

4. Process according to one of claims 1 to 3, wherein prior to the stage of bringing it into contact with the organic solvent, a stage of separation of at least a portion of a "redox" catalytic solution mixed with the sulfur to be purified is carried out.

5. Process according to one of claims 1 to 4, wherein the sulfur that is to be purified contains 2 to 90% by weight of the catalytic solution and preferably 5 to 50% by weight.

6. Process according to one of claims 1 to 5, wherein the temperature of the contact zone is 120 to 160°C.

7. Process according to one of claims 1 to 6, wherein the sulfur that is to be purified is brought into contact with the solvent in proportions of between 5 and 80% by weight of sulfur.

8. Process according to one of claims 1 to 7, wherein a vapor phase that is condensed so as to recover a liquid phase that contains impurities and a residual gaseous effluent that is purified before disposing of it are drawn off.

9. Process according to one of claims 1 to 8, wherein the organic solvent is a polyethylene glycol.